# EUROPÄISCHE PATENTSCHRIFT

(11) **EP 0 799 969 B1**
(45) Veröffentlichungstag und Bekanntmachung des Hinweises auf die Patenterteilung: **12.02.2003**
(21) Anmeldenummer: 97105346.7
(22) Anmeldetag: 29.03.1997
(51) Int. Cl.: E21B 44/00, E21B 7/20, E21B 23/14

(54) **Verfahren und Vorrichtung zum Einziehen von Rohren oder Kabeln in eine Pilotbohrung**
Process and device for pulling pipes or cables in a pilot hole
Procédé et dispositif de tirage de tubes ou de câbles dans un trou pilote

(30) Priorität: 04.04.1996 DE 19613788
(43) Veröffentlichungstag der Anmeldung: 08.10.1997
(60) Teilanmeldung: 02021508.3
(73) Patentinhaber: Tracto-Technik Paul Schmidt Spezialmaschinen, 57368 Lennestadt (DE)
(72) Erfinder: Hesse, Alfons, 57368 Lennestadt (DE); Schmidt, Joachim, 57368 Lennestadt (DE); Wurm, Dieter, 57399 Kirchhundem (DE); Zerbs, Klaus, 57392 Schmallenberg (DE)
(74) Vertreter: König, Gregor Sebastian, Dipl.-Biol.

(56) Entgegenhaltungen:
- EP-A- 0 360 321
- US-A- 4 502 666
- US-A- 5 351 764

## Beschreibung

Die Erfindung betrifft ein Verfahren und eine Vorrichtung zum Einziehen von Rohren oder Kabeln in eine Pilotbohrung mittels eines drehend und/oder ziehend und/oder schlagend oder vibrierend angetriebenen Bohrgestänges, gegebenenfalls mit einem Aufweitkopf, dem gegebenenfalls eine Spülflüssigkeit zugeführt wird und der mit dem einzuziehenden Rohr oder Kabel vorzugsweise über einen Zugwirbel gekuppelt ist.

Das Einziehen von Rohren oder Kabeln erfolgt in der Regel derart, daß zunächst eine Pilotbohrung von einem Startpunkt zu einem Zielpunkt eingebracht wird, indem ein Bohrgestänge von einer Antriebsvorrichtung drehend und drückend sowie gegebenenfalls schlagend angetrieben und gegebenenfalls gelenkt durch das Erdreich vorgetrieben wird. Am Zielpunkt läßt sich dann ein Rohr oder Kabel mit dem Bohrgestänge mittels einer Kupplung verbinden, die Zugkräfte, aber keine Drehung von dem Bohrgestänge auf das Rohr oder Kabel überträgt. Ist der Durchmesser des Rohrs oder des Kabels gleich oder kleiner als der Durchmesser des Bohrgestänges, ist ein Aufweiten der Pilotbohrung beim Einziehen des Rohres oder Kabels nicht erforderlich. Ist der Durchmesser des Rohres oder Kabels größer als der Durchmesser des Bohrgestänges, muß zwischen dem Bohrgestänge und der Kupplung für das Rohr oder Kabel ein Aufweitkopf eingesetzt werden, der dazu dient, das Erdreich und Gestein um die Pilotbohrung herum bis zum Durchmesser des Aufweitkopfs zu lockern und abzutragen. Um das Lockern und Abtragen des Erdreichs und Gesteins zu erleichtern und das Abfördern an die Erdoberfläche zu bewerkstelligen, kann dem Aufweitkopf eine Spülflüssigkeit zugeführt werden, die aus einer Bentonitsuspension mit einstellbarer Viskosität bestehen kann. Zumindest ein Teil der thixotropen Bentonitsuspension fließt in der Regel durch einen Ringkanal zwischen der aufgeweiteten Bohrung und dem einzuziehenden Rohr oder Kabel und vermindert die Reibung zwischen der Wandung der aufgeweiteten Bohrung und dem Rohr oder Kabel.

Wenn es trotz der Spülung zu Verstopfungen im Ringraum kommt, kann die auf das Rohr oder Kabel wirkende Zugkraft so stark ansteigen, daß die zulässige Zugkraft überschritten wird. Dies läßt sich indessen bei den herkömmlichen Verfahren zum Einziehen von Rohren oder Kabeln erst feststellen, wenn das Einziehen beendet ist und das Ende des eingezogenen Rohres oder Kabels am Startpunkt austritt, so daß es erforderlich sein kann, das überdehnte, eingezogene Rohr oder Kabel aus der Erdbohrung zu entfernen und ein neues Rohr oder Kabel einzuziehen. Das Gleiche gilt für den Fall, daß die zulässige Zugkraft soweit überschritten wird, daß das Rohr oder Kabel in der Bohrung reißt.

Es wurden daher Systeme zum Einbringen von Langkörpern in das Erdreich mit Zugkraftmeßvorrichtungen ausgestattet, um den Einziehvorgang zu verbessern. Dazu ist beispielsweise aus der US-Patentschrift 4 502 666 bekannt, den Zugkopf einer Zugvorrichtung zum Einziehen eines Kabels in eine Leitung mittels einer Winde mit einem Sensor auszustatten, der einer oberirdischen Steuerungsvorrichtung Signale über die anliegende Zugkraft anzeigt.

Daneben ist aus der US-Patentschrift 5 351 764 eine Vorrichtung zum Einziehen von Langkörpern mittels eines drehend oder ziehend gekuppelten Bohrgestänges bekannt, das eine Zugkräfte übertragende Kupplung zwischen dem Bohrgestänge und dem nachgezogenen Langkörper aufweist und mit einer Meßvorrichtung versehen ist. Diese ist mit der Antriebsvorrichtung verbundenen. Es handelt sich dabei allerdings um eine Druckmeßvorrichtung zum Erfassen des Über- bzw. Unterdrucks in der Bohrvorrichtung, um ein ungleichgewichtiges Zuoder Abströmen von Bohrflüssigkeit zu vermeiden. Das Problem der mechanischen Überbeanspruchung des nachzuziehenden Langkörpers wird damit nicht gelöst.

Der Erfindung liegt **daher** das Problem zugrunde, ein Verfahren und eine Vorrichtung zum Einziehen von Rohren oder Kabeln zu schaffen, mit denen sich eine Überbeanspruchung des einzuziehenden Rohres oder Kabels durch eine Überschreitung der zulässigen Zugkraft vermeiden läßt.

Ausgehend von dieser Problemstellung wird bei einem Verfahren der eingangs erwähnten Art vorgeschlagen, daß die Zugkraft zwischen dem Bohrgestänge und dem einzuziehenden Rohr oder Kabel fortlaufend gemessen, die Meßwerte zu einem Antrieb für das Bohrgestänge in Echtzeit übertragen und die die Zugkraft beeinflussenden Parameter wie der Vorschub und/oder die Vorschubgeschwindigkeit und/oder die Vorschubkraft und/oder die Drehgeschwindigkeit und/oder das Drehmoment und/oder die Spülflüssigkeitsmenge und/oder Spülflüssigkeitsdruck und/oder die Spülflüssigkeitsviskosität je nach Art der Maschine in Abhängigkeit von den Meßwerten auf durch die Belastbarkeit des einzuziehenden Rohres vorgegebene Werte eingestellt werden.

Die Erfindung geht von der Überlegung aus, daß die Zugkraft an der Stelle gemessen werden muß, wo die kritische Zugkraft auftritt und daß die gemessene Zugkraft fortlaufend in Echtzeit zum Antrieb an der Erdoberfläche übertragen werden muß, um dort die Verfahrensparameter einzustellen, die das Einhalten der vorgegebenen Zugkraft gewährleisten.

Das Einstellen kann eine Bedienungsperson am Antrieb vornehmen, wenn die Meßwerte angezeigt werden. Vorteilhafterweise lassen sich jedoch die Meßwerte direkt einer Steuerung für den Antrieb übermitteln, um zum automatischen Einstellen des Antriebs verwendet zu werden.

Wenn nicht einzelne Rohre oder Kabel eingezogen werden, sondern Rohr- oder Kabelbündel, kann es vorteilhaft sein, an jedem einzelnen Rohr- oder Kabelstrang eine Zugkraftmessung vorzunehmen.

Die erfindungsgemäße Vorrichtung zum Einziehen von Rohren oder Kabeln in eine Pilotbohrung kann einen Antrieb, eine Steuerung für den Antrieb, ein mit dem Antrieb drehend und ziehend gekuppeltes Bohrgestänge, einen Aufweitkopf am Ende des Bohrgestänges, eine Spülflüssigkeitszufuhr zum Ende des Bohrgestänges bzw. zum Aufweitkopf, eine Zugkräfte, aber keine Drehung übertragende Kupplung zwischen dem Ende des Bohrgestänges bzw. dem Aufweitkopf und dem Rohr oder Kabel, eine Zugkraftmeßvorrichtung an der Kupplung zwischen dem Ende des Bohrgestänges bzw. dem Aufweitkopf und dem Rohr oder Kabel und eine Meßwertübertragungsvorrichtung zum Antrieb aufweisen.

Die Meßwertübertragungsvorrichtung kann entweder als drahtloser Sender an der Zugkraftmeßvorrichtung oder als eine Kabelverbindung zwischen der Zugkraftmeßvorrichtung und dem Antrieb ausgebildet sein.

Das Kabel kann durch das Bohrgestänge geführt sein, wobei das Bohrgestänge als Leiter dienen kann, da das Bohrgestänge aus Stahl besteht und daher elektrisch leitend ist. In diesem Fall muß das Bohrgestänge im Bereich des Antriebs Schleifkontakte aufweisen, um die Meßwerte vom drehend angetriebenen Bohrgestänge abgreifen zu können. Derartige Schleifverbindungen lassen sich vermeiden, wenn das Kabel in einer aufgeweiteten Erdbohrung parallel zum Rohr oder Kabel und oberhalb der Erdoberfläche zum Antrieb geführt ist.

Besonders vorteilhaft ist es, wenn das Kabel außerhalb des Rohres oder Kabels mitgezogen und von einem nahe der Einzugsstelle angeordneten Haspel abgerollt wird, da in diesem Fall kein Einfädeln des Kabels in das einzuziehende Rohr erforderlich ist und keine Unterbrechungen des Rohreinziehens beim Verbinden von Rohrstücken mit dem Rohrende auftreten.

Auch wenn die Kabel in der Erdbohrung parallel zum Rohr oder Kabel geführt ist, läßt sich das Bohrgestänge als Leiter verwenden.

Von dem an der Erdoberfläche befindlichen Haspel lassen sich die Meßwerte entweder über ein weiteres Kabel zum Antrieb oder mittels einer Funkverbindung übertragen. Eine Funkverbindung vom Haspel zum Antrieb ist vorteilhaft, wenn das Rohr oder Kabel ein Gewässer oder einen vielbefahrenen Verkehrsweg unterfährt und sich daher ein Kabel oberirdisch nur schwierig verlegen läßt.

Die Datenübertragung kann auch mit Hilfe eines im Rohr angeordneten stationären Senderwagens geschehen, der mit der Meßvorrichtung über ein im Rohrinnern verlaufendes Kabel verbundenen ist. Dieser Senderwagen ändert seine Position nicht, wenn er magnetisch oder durch Schwerkraft in dem sich im Erdreich vorwärtsbewegenden Rohr festgehalten wird. Das kann mit Hilfe eines außerhalb des Rohres angeordneten Mitnehmermagneten geschehen.

Der Senderwagen kann als an der Rohrinnenwandung anliegender Stopfen ausgebildet sein und läßt sich dann mit Hilfe von Preßluft im Rohr positionieren und auch in einer bestimmten Raumlage halten.

Der Senderwagen ist vorzugsweise mit einer Kabeltrommel versehen, von der sich ein Kabel zur Datenübertragung entsprechend dem Rohrvortrieb kontinuierlich abzieht. Des weiteren besitzt der Senderwagen einen Sender und gegebenenfalls einen Magnetschuh zum fixieren der Raumlage des Senderwagens unabhängig von dem sich vorwärtsbewegenden Rohr.

Zwischen dem Bohrgestänge und dem Rohr oder Kabel befindet sich vorzugsweise eine Kupplung in Gestalt eines Zugwirbels mit einem mit dem Bohrgestänge verbundenen Lagerstück, in dem ein Meßgehäuse drehbar und gegebenenfalls auch axial verschiebbar gelagert ist. In dem Meßgehäuse kann sich ein mit dem Lagerstück verbundener Zugkolben mit einem Drucksensor befinden, mit dessen Hilfe sich der Druck eines vor dem Kolben befindlichen Meßgases feststellen läßt. Das Messen der Zugkraft kann jedoch auch mit Hilfe eines piezoelektrischen Druckaufnehmers geschehen, der an die Stelle des Meßgases tritt. Schließlich kann aber auch die Kolbenstange des in dem Meßgehäuse angeordneten Zugkolbens mit einem Dehnungsmeßstreifen belegt sein.

Die Erfindung wird nachfolgend anhand von in der Zeichnung dargestellten Ausführungsbeispielen des näheren erläutert. In der Zeichnung zeigen:
- Fig. 1: eine Vorrichtung zum Einbringen einer Rohrleitung in eine Pilotbohrung mit einem außerhalb des Rohrs verlaufenden Datenkabel,

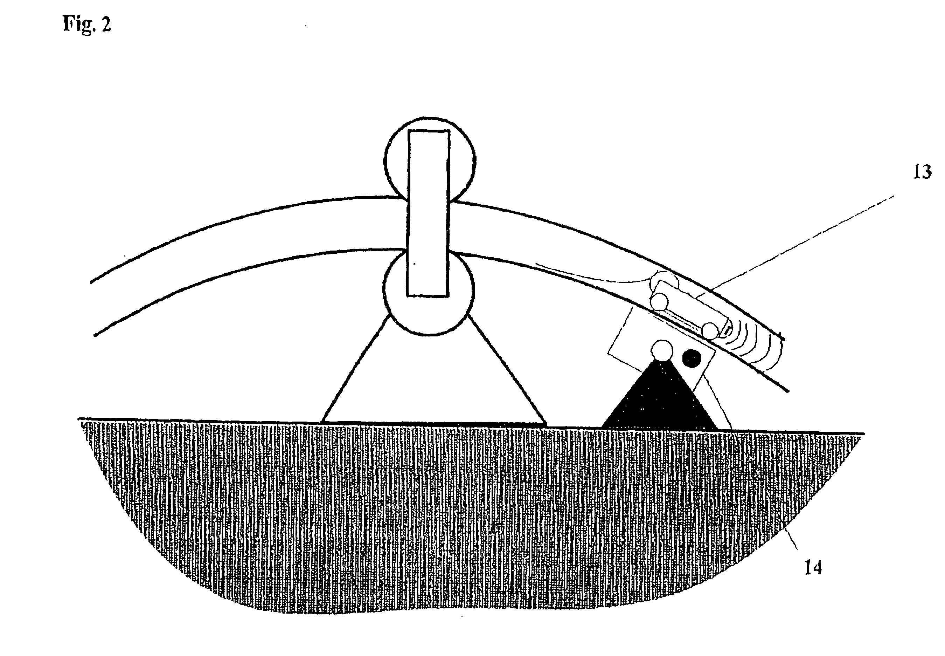

- Fig. 2: ein noch außerhalb des Erdreichs befindliches Rohrstück mit einem Senderwagen,

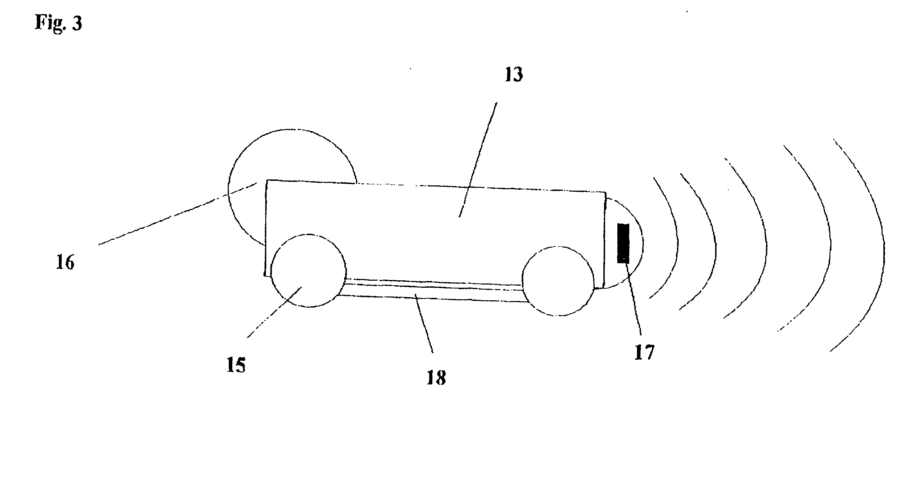

- Fig. 3: den Senderwagen der Fig. 2 in vergrößerter Darstellung,

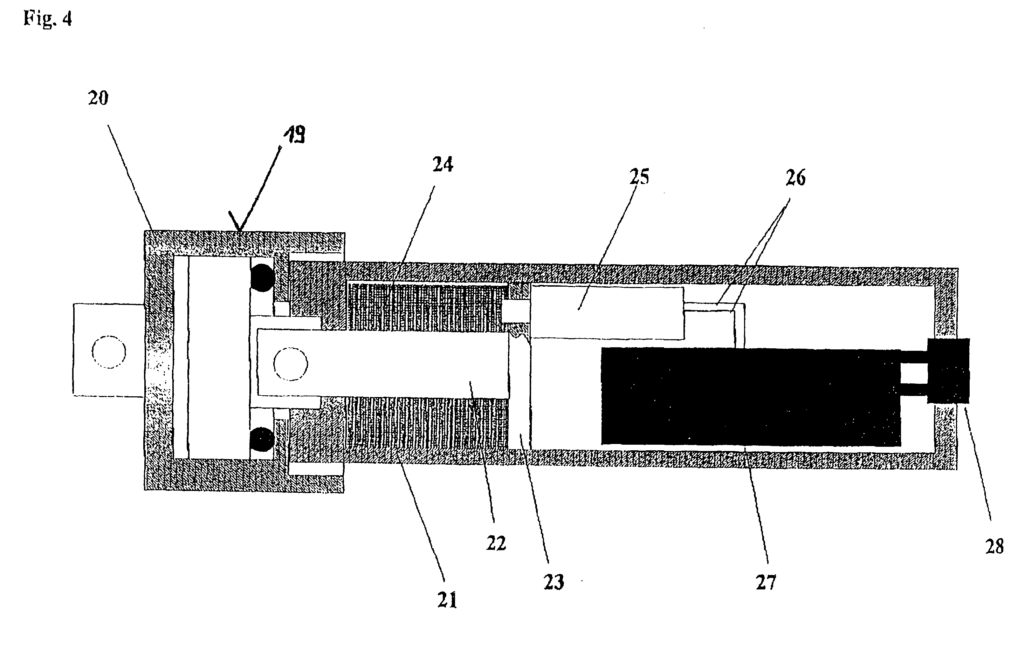

- Fig. 4: einen Zugwirbel mit einem Meßgehäuse für ein Meßgas,
- Fig. 5: einen Zugwirbel mit einem im Meßgehäuse angeordneten Piezokristall und

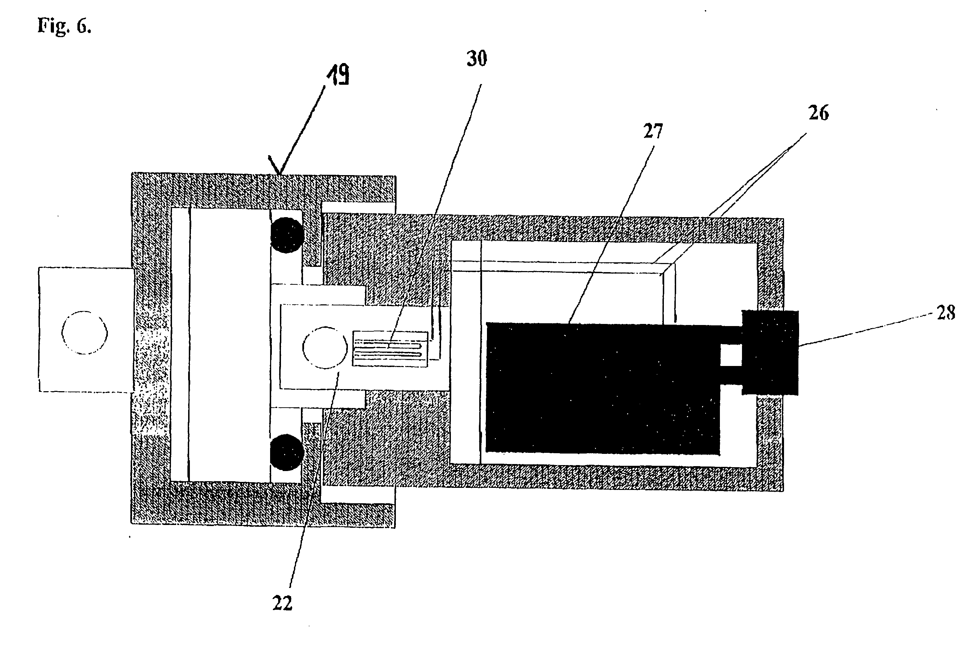

- Fig. 6: einen Zugwirbel mit einem im Meßgehäuse angeordneten Dehnungsmeßstreifen.

Eine Pilotbohrung 4 wurde mittels eines Antriebs 1, der ein Bohrgestänge 3 schiebend und drehend, gegebenenfalls auch schlagend antreibt, von einem Startpunkt bis zu einem Zielpunkt ins Erdreich eingebracht. Der Antrieb 1 weist einen Steuerkasten 2 mit einer Steuerung auf, mittels derer sich der Vorschub und/oder die Drehgeschwindigkeit und/oder das Drehmoment etc. einstellen lassen. Des weiteren kann durch das Bohrgestänge 3 eine Spülflüssigkeit in nicht dargestellter Weise bis zum Ende geführt sein. Diese Spülflüssigkeit besteht aus einer thixotrop eingestellten Bentonitsuspension, deren Menge und/oder Viskosität sich ebenfalls einstellen läßt. Nach Erstellen der Pilotbohrung 4 wird das Ende des Bohrgestänges 3 mit einem Aufweitkopf 5 verbunden, der dazu dient, die Pilotbohrung 4 zu einer Bohrung 6 aufzuweiten. Das lose Erdreich und zerkleinerte Gestein werden mittels der Bentonitsuspension aus der aufgeweiteten Bohrung 6 durch den Ringraum zwischen der aufgeweiteten Bohrung 6 und dem Rohr 8 zur Erdoberfläche hin abtransportiert.

Über eine Kupplung 7 ist der Aufweitkopf 5 mit dem Rohr 8 gekuppelt. Diese Kupplung 7 ist geeignet, Zugkräfte zu übertragen, ohne die Drehung des Bohrgestänges 4 und des Aufweitkopfes 5 auf das Rohr 8 zu übertragen. In die Kupplung 7 ist eine Zugkraftmeßvorrichtung 9 integriert, deren Meßwerte fortlaufend mittels eines Kabels 10 an die Erdoberfläche geführt werden.

Das Kabel 10 verläuft parallel zum Rohr 8 und ist außerhalb des Rohrs 8 angeordnet, so daß es sich direkt zu einem Haspel 11 führen läßt, von wo das Kabel 10 beim Einziehen des Rohres 8 abrollt.

Auf diese Weise werden das Rohr 8 und das Kabel 10 gleichzeitig in die aufgeweitete Bohrung 6 eingezogen, ohne sich gegenseitig zu behindern. Von dem Haspel 11 führt ein Kabel 12 zum Steuerkasten 2 des Antriebs. Dort bewirken die Meßwerte eine fortlaufende Anzeige der von der Zugkraftmeßvorrichtung 9 gemessenen Zugkräfte, so daß entweder die Bedienungsperson den Vorschub und/oder die Drehgeschwindigkeit und/oder die Spülflüssigkeitsmenge und/oder die Spülflüssigkeitsviskosität etc. in Abhängigkeit von den angezeigten Meßwerten auf durch die Belastbarkeit des Rohres 8 vorgegebene Werte vornehmen kann, oder daß die Meßwerte direkt auf eine automatische Steuerung des Antriebs 1 einwirken, um die entsprechenden Einstellungen vorzunehmen.

Schließlich ist es auch noch möglich, einen Sender direkt an der Zugkraftmeßvorrichtung 9 anzuordnen, um die Meßwerte von dort drahtlos zum Bohrgerät 1 zu übertragen.

Besonders bei Naßbohrgeräten, bei denen das Bohrklein über den Ringkanal zwischen der aufgeweiteten Bohrung 6 und dem Rohr 8 zur Erdoberfläche geleitet wird, kann sich die auf das Rohr 8 wirkende Zugkraft erhöhen, wenn bei zu geringer Spülung oder bei zu dickflüssiger oder auch bei zu dünnflüssiger Spülung Verstopfungen des Ringraumes auftreten. Die Viskosität der Bentonitsuspension wird abhängig von den Bodenverhältnissen eingestellt, die auch während des Bohrvorganges wechseln können. Tritt während des Einziehens des Rohres eine Steigerung der Zugkraft ein, ist es möglich, entsprechend zu reagieren, indem der Vorschub und/oder die Drehgeschwindigkeit und/oder die Spülflüssigkeitsmenge und/oder die Spülflüssigkeitsviskosität oder weitere Parameter verändert werden, so daß der Ringkanal wieder frei gespült und das Bohrklein abgefördert wird. Durch diese Maßnahme verringert sich die auf das Rohr einwirkende Zugkraft, und es wird verhindert, daß das Rohr 8 überdehnt wird oder gar abreißt.

Wenn das Kabel 10 parallel zum eingezogenen Rohr 8 in der aufgeweiteten Bohrung 6 verbleibt, kann es dazu dienen, das Rohr später gegebenenfalls durch Besenden des Kabels im Erdreich zu orten, was sonst kaum möglich ist, wenn es sich bei dem eingezogenen Rohr um ein Kunststoffrohr handelt.

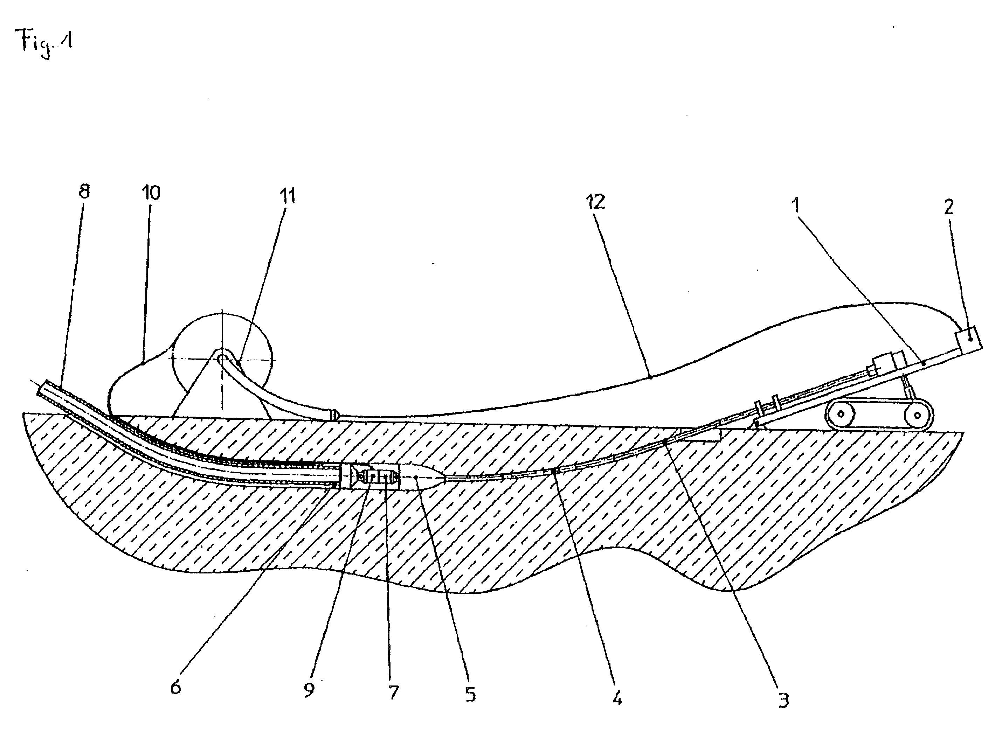

Anders als bei dem Ausführungsbeispiel der Fig. 1 kann das Kabel 10 zur Datenübertragung auch durch das Rohr bis zu einem Senderwagen 13 geführt sein, der mit Hilfe eines externen Mitnehmermagneten 14 ortsfest gehalten wird, obgleich sich das Rohr kontinuierlich vorwärtsbewegt bzw. in das Erdreich eingezogen wird. Der Senderwagen 13 besitzt Rollen 15 und ist mit einer Kabeltrommel 16 versehen, von der sich das Datenkabel 10 entsprechend der Vorwärtsbewegung des Rohrs kontinuierlich abwickelt. Des weiteren enthält der Senderwagen einen Sender 17 und einen mit dem Mitnehmermagneten 14 zusammenwirkenden Magnetschuh 18.

Die zwischen dem Rohr 8 und dem Aufweitkopf 5 angeordnete Kupplung 7 mit der Zugkraftmeßvorrichtung 9 besteht vorzugsweise aus einem Zugwirbel 19 mit einem mit dem Bohrgestänge 3 verbundenen Lagerstück 20, in dem ein Meßgehäuse 21 drehbar gelagert ist. Mit dem Lagerstück ist über eine Kolbenstange 22 ein in dem Meßgehäuses 21 geführter Kolben 23 verbunden, vor dem sich ein Gaspolster 24 befindet. In dem Kolben befindet sich ein Drucksensor 25, der über eine Leitung 26 mit einer Auswerteelektronik 27 verbunden ist, deren Schnittstelle 28 das Datenkabel 10 zu dem Senderwagen 13 führt.

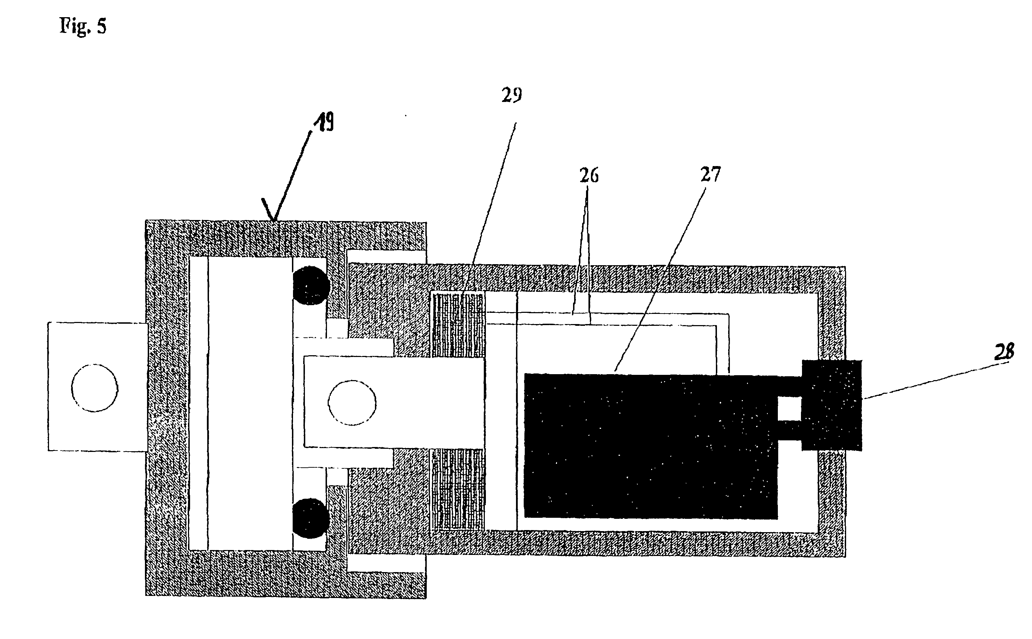

An die Stelle des Gaspolsters 24 kann auch ein Piezokristall 29 treten, das über die Leitung 26 mit der Auswerteelektronik 27 verbunden ist (Fig. 5).

Schließlich kann die Kolbenstange 22 auch mit einem Dehnungsmeßstreifen versehen sein, der aus der Auswerteelektronik 27 mit Spannung versorgt wird. Der Dehnungsmeßstreifen ist über die Leitung 26 mit der Auswerteelektronik verbunden.

Das erfindungsgemäße Messen der Zugkraft dort, wo sie wirksam ist, und das unmittelbare Übertragen der Meßdaten erlaubt es, das Rohr oder Kabel unter optimalen Bedingungen ins Erdreich einzubringen, da sich jeder unerwünschten Abweichung eines Parameters von einem Sollwert sofort durch die Änderung eines der die Zugkraft bestimmenden Parameters entgegenwirken läßt. Auf diese Weise ist es möglich, ein Rohr oder Kabel mit maximal zulässiger Zugkraft zu verlegen, ohne daß die Gefahr einer Beschädigung besteht.

## Patentansprüche

1. Verfahren zum Einziehen von Rohren (8) oder Kabeln (10) in eine Pilotbohrung (4) mittels eines drehend und/oder ziehend angetriebenen Bohrgestänges (3), **dadurch gekennzeichnet,**
- **daß** die Zugkraft zwischen dem Bohrgestänge oder dem Aufweitkopf (5) und dem Rohr (8) oder Kabel (10) fortlaufend gemessen,
- die Meßwerte zu einer Antriebsvorrichtung (1) für das Bohrgestänge (3) in Echtzeit übertragen und
- die die Zugkraft beeinflussenden Parameter in Abhängigkeit von den Meßwerten auf durch die Belastbarkeit des Rohres (8) oder Kabels (10) vorgegebene Werte eingestellt **werden.**

2. Verfahren nach Anspruch 1, **dadurch gekennzeichnet, daß** ein Rohroder Kabelbündel mit einer Zugkraftmessung an jedem Rohr- oder Kabelstrang eingezogen wird.

3. Verfahren nach Anspruch 1 oder 2 **dadurch gekennzeichnet, daß** die Meßwerte direkt einer Steuerung für die Antriebsvorrichtung übermittelt und zum automatischen Einstellen des Antriebs verwendet werden.

4. Verfahren nach einem der Ansprüche 1 bis 3, **dadurch gekennzeichnet, daß** die gemessenen Zugkraftwerte über den Bohrverlauf aufgezeichnet und gespeichert werden.

5. Vorrichtung zum Einziehen von Rohren (8) oder Kabeln in eine Pilotbohrung mit einem Antrieb (1), **einer Steuerung** (2), einem mit dem Antrieb (1) drehend oder ziehend gekuppelten Bohrgestänge (3), einer Meßwertübertragung **zur Antriebsvorrichtung** (10, 11, 12) und einer Zugkräfte übertragenden, zwischen dem Bohrgestänge (3) oder dem Aufweitkopf und dem Rohr (8) oder Kabel angeordneten, Zugkräfte übertragenden Kupplung (7), **dadurch gekennzeichnet, daß** die Kupplung (7) eine Zugkraftmeßvorrichtung (9) aufweist.

6. Vorrichtung nach Anspruch 5, **gekennzeichnet durch** einen drahtlosen Sender (14).

7. Vorrichtung nach Anspruch 5, **gekennzeichnet durch** eine Kabelverbindung (10) zwischen der Zugkraftmeßvorrichtung (9) und dem Antrieb (1).

8. Vorrichtung nach einem der Ansprüche 5 bis 7, **gekennzeichnet durch** eine automatische Steuerung (2) für den Antrieb (1).

9. Vorrichtung nach Anspruch 7 oder 8, **dadurch gekennzeichnet, daß** ein Kabel durch das Bohrgestänge (3) geführt ist.

10. Vorrichtung nach Anspruch 9, **dadurch gekennzeichnet, daß** das Bohrgestänge (3) als Leiter geschaltet ist.

11. Vorrichtung nach Anspruch 7 oder 8, **dadurch gekennzeichnet, daß** ein Kabel (10) in der Erdbohrung (6) parallel zum Rohr (8) oder Kabel und oberhalb der Erdoberfläche zum Antrieb (1) geführt ist.

12. Vorrichtung nach Anspruch 11, **dadurch gekennzeichnet, daß** ein Kabel (10) außerhalb des Rohres (8) oder Kabels zu einem nahe der Einzugsstelle angeordneten Haspel (11) geführt ist.

13. Vorrichtung nach Anspruch 12, **gekennzeichnet durch** eine Kabelverbindung (12) von dem Haspel (11) zum Antrieb (1).

14. Vorrichtung nach Anspruch 12, **gekennzeichnet durch** eine Funkverbindung von dem Haspel (11) zum Antrieb (1).

15. Vorrichtung nach einem der Ansprüche 5 bis 14, **dadurch gekennzeichnet, daß** das Meßsignal der Zugkraftmeßvorrichtung (9) über ein leitendes Kabel oder Rohr übertragen und an der Erdoberfläche abgegriffen wird.

16. Vorrichtung nach einem der Ansprüche 5 bis 15, **dadurch gekennzeichnet, daß** das Rohr eine Meßvorrichtung für Biegespannungen enthält.

17. Vorrichtung nach einem der Ansprüche 5 bis 10, **gekennzeichnet durch** einen mit der Meßvorrichtung (9) über ein Innenkabel (10) verbundenen, im Rohr (8) angeordneten stationären Senderwagen (13).

18. Vorrichtung nach Anspruch 17, **dadurch gekennzeichnet, daß** der Senderwagen (13) magnetisch oder durch Schwerkraft in dem sich in das Erdreich bewegenden Rohr (8) ortsfest gehalten wird.

19. Vorrichtung nach Anspruch 17 oder 18, **dadurch gekennzeichnet, daß** außerhalb des Rohres (8) ein Mitnehmermagnet (14) angeordnet ist.

20. Vorrichtung nach einem der Ansprüche 17 bis 19, **gekennzeichnet durch** einen Senderwagen (13) mit Rollen (15), einer Kabeltrommel (16), einem Sender (17) und einem Magnetschuh (18).

21. Vorrichtung nach einem der Ansprüche 5 bis 20, **gekennzeichnet durch** eine Kupplung (7) in Gestalt eines Zugwirbels (19) mit einem Lagerstück (20), in dem ein Meßgehäuse drehbar und axial verschiebbar gelagert ist.

22. Vorrichtung nach Anspruch 21, **dadurch gekennzeichnet, daß** in dem Meßgehäuse (21) ein mit dem Lagerstück (20) über eine Kolbenstange (22) verbundener Zugkolben (23) angeordnet ist.

23. Vorrichtung nach Anspruch 22, **dadurch gekennzeichnet, daß** der Zugkolben (23) mit einem Drucksensor (25) versehen ist.

24. Vorrichtung nach Anspruch 22, **dadurch gekennzeichnet, daß** der Zugkolben (23) mit einem piezoelektrischen Druckaufnehmer (29) verbunden ist.

25. Vorrichtung nach Anspruch 22, **dadurch gekennzeichnet, daß** die Kolbenstange (22) mit einem Dehnungsmeßstreifen (30) belegt ist.

## Claims

1. Process for drawing pipes (8) or cables (10) into a pilot bore (4) by means of rotatingly and/or tractively driven drilling rods (3) **characterised in that**
- the tractive force between the drilling rods or the widening head (5) and the pipe (8) or cable (10) is continuously measured,
- the measured values are transmitted to a drive mechanism (1) for the drilling rods (3) in real time, and
- the parameters affecting the tractive force are adjusted depending on the measured values to match the values predetermined by the load-bearing capacity of the pipe (8) or the cable (10).

2. Process according to claim 1 **characterised in that** a bundle of pipes or cables is drawn-in, whereby the tractive force is measured at each bundle of pipes or cables.

3. Process according to claim 1 or 2 **characterised in that** the measured values are directly transmitted to a control for the drive mechanism and are used to automatically adjust the drive.

4. Process according to claim 1 to 3 **characterised in that** the measured tractive-force values are recorded and stored while drilling is carried out.

5. Device for drawing pipes (8) or cables into a pilot bore comprising a drive (1), a control (2), drilling rods (3) rotatingly or tractively coupled with drive (1), a measured value transmission to the drive mechanism (10, 11, 12) and a tractive-force transmitting coupling (7) arranged between drilling rods (3) or the widening head and the pipe (8) or cable, **characterised in that** the coupling (7) includes a tractive-force measuring device (9).

6. Device according to claim 5, **characterised by** a wireless transmitter (14).

7. Device according to claim 5, **characterised by** a cable connection (10) between tractive-force measuring device (9) and drive (1).

8. Device according to one of claims 5 to 7, **characterised by** an automatic control (2) for drive (1).

9. Device according to claim 7 or 8, **characterised in that** a cable is run through the drilling rods (3).

10. Device according to claim 9, **characterised in that** the drilling rods (3) are connected to act as a conductor.

11. Device according to claim 7 or 8, **characterised in that** a cable (10) is run to the drive (1) in earth bore (6) in parallel to the pipe (8) or cable and at ground level.

12. Device according to claim 11, **characterised in that** a cable (10) is run outside of the pipe (8) or cable to a reel (11) arranged closely to the drawing-in point.

13. Device according to claim 12, **characterised by** a cable connection (12) from the reel (11) to drive (1).

14. Device according to claim 12, **characterised by** a radio link from the reel (11) to drive (1).

15. Device according to one of claims 5 to 14, **characterised in that** the measuring signal of tractive-force measuring device (9) is transmitted via a conducting cable or pipe and picked off at ground level.

16. Device according to one of claims 5 to 15, **characterised in that** the pipe contains a measuring device for bending stresses.

17. Device according to one of claims 5 to 10, **characterised by** a stationary transmitter vehicle (13) arranged inside pipe (8) and connected with the measuring device (9) via an inside cable (10).

18. Device according to claim 17, **characterised in that** the transmitter vehicle (13) is retained in a fixed position magnetically or by gravity inside the pipe (8) as it moves through the soil.

19. Device according to claims 17 or 18, **characterised in that** an entraining magnet (14) is arranged outside the pipe (8).

20. Device according to one of claims 17 to 19, **characterised by** a transmitter vehicle (13) with rollers (15), a cable drum (18), a transmitter (17) and a magnetic shoe (18).

21. Device according to one of claims 5 to 20, **characterised by** a coupling (7) shaped as a tractive swivel(19) with a bearing piece (20), in which a measuring housing is rotatably and axially movably mounted.

22. Device according to claim 21, **characterised in that** a tractive piston (23) connected with bearing piece (20) via a piston rod (22) is arranged inside the measuring housing (21).

23. Device according to claim 22, **characterised in that** the tractive piston (23) is equipped with a pressure sensor (25).

24. Device according to claim 22, **characterised in that** the tractive piston (23) is connected with a piezoelectric pressure absorber (29).

25. Device according to claim 22, **characterised in that** piston rod (22) is fitted with an expansion measuring strip (30).

## Revendications

1. Procédé de tirage de tubes (8) ou de câbles (10) dans un trou pilote (4) au moyen d'une tige de sondage (3) entraînée de manière rotative et/ou en traction, **caractérisé en ce que**
- la force de traction entre la tige de sondage ou la tête d'élargissement (5) et le tube (8) ou le câble (10) est mesurée en continu,
- les valeurs mesurées sont transmises en temps réel à un dispositif d'entraînement (1) pour la tige de sondage (3) et
- les paramètres influençant la force de traction sont réglés sur des valeurs prédéfinies par la capacité de charge du tube (8) ou du câble (10) en fonction des valeurs mesurées.

2. Procédé selon la revendication 1, **caractérisé en ce qu**'un faisceau de tubes ou de câbles est tiré avec une mesure de traction sur chaque faisceau de tubes ou de câbles.

3. Procédé selon la revendication 1 ou 2, **caractérisé en ce que** les valeurs mesurées sont transmises directement à une commande pour le dispositif d'entraînement et utilisées pour le réglage automatique de l'entraînement.

4. Procédé selon l'une des revendications 1 à 3, **caractérisé en ce que** les valeurs de force de traction mesurées lors de l'opération de sondage sont enregistrées et mémorisées.

5. Dispositif de tirage de tubes (8) ou de câbles (10) dans un trou pilote (4) au moyen d'un entraînement (1), d'une commande (2), d'une tige de sondage (3) couplée à l'entraînement (1) de manière rotative et/ou en traction, d'une transmission des valeurs mesurées pour le dispositif d'entraînement (10, 11, 12) et d'un couplage (7) transmettant des forces de traction, disposé entre la tige de sondage (3) ou la tête d'élargissement et le tube (8) ou le câble, **caractérisé en ce que** le couplage (7) présente un dispositif de mesure de la force de traction (9).

6. Dispositif selon la revendication 5, **caractérisé par** un émetteur sans fil (14).

7. Dispositif selon la revendication 5, **caractérisé par** une liaison par câble (10) entre le dispositif de mesure de la force de traction (9) et l'entraînement (1).

8. Dispositif selon l'une des revendications 5 à 7, **caractérisé par** une commande (2) automatique pour l'entraînement (1).

9. Dispositif selon la revendication 7 ou 8, **caractérisé en ce qu'**un câble est guidé à travers la tige de sondage (3).

10. Dispositif selon la revendication 9, **caractérisé en ce que** la tige de sondage (3) est couplée comme conducteur.

11. Dispositif selon la revendication 7 ou 8, **caractérisé en ce qu'**un câble (10) est guidé dans le sondage (6) parallèlement au tube (8) ou au câble et au-dessus de la surface de la terre pour l'entraînement (1).

12. Dispositif selon la revendication 11, **caractérisé en ce qu'**un câble (10) est guidé en-dehors du tube (8) ou du câble vers un treuil (11) disposé à proximité du point d'entraînement.

13. Dispositif selon la revendication 12, **caractérisé par** une liaison par câble (12) depuis le treuil (11) vers l'entraînement (1).

14. Dispositif selon la revendication 12, **caractérisé par** une liaison radio depuis le treuil (11) vers l'entraînement (1).

15. Dispositif selon l'une des revendications 5 à 14, **caractérisé en ce que** le signal de mesure du dispositif de mesure de la force de traction (9) est transmis par un câble ou un tube conducteur et mesuré à la surface de la terre.

16. Dispositif selon l'une des revendications 5 à 15, **caractérisé en ce que** le tube contient un dispositif de mesure pour des contraintes de flexion.

17. Dispositif selon l'une des revendications 5 à 10, **caractérisé par** un chariot émetteur (13) fixe disposé dans le tube (8), raccordé au dispositif de mesure (9) à l'aide d'un câble interne (10).

18. Dispositif selon la revendication 17, **caractérisé en ce que** le chariot émetteur (13) est maintenu de manière fixe magnétiquement ou par la force de gravité dans le tube (8) se déplaçant dans la terre.

19. Dispositif selon la revendication 17 ou 18, **caractérisé en ce qu'**un aimant d'entraînement (14) est disposé en-dehors du tube (8).

20. Dispositif selon l'une des revendications 17 à 19, **caractérisé par** un chariot émetteur (13) avec des roulettes (15), une bobine de câble (16), un émetteur (17) et un sabot magnétique (18).

21. Dispositif selon l'une des revendications 5 à 20, **caractérisé par** un couplage (7) réalisé comme un tourbillon de traction (19) avec une pièce de butée (20) dans laquelle est disposé un boîtier de mesure de manière rotative et déplaçable axialement.

22. Dispositif selon la revendication 21, **caractérisé en ce qu'**un piston de traction (23) raccordé à la pièce de butée (20) à l'aide d'une tige de piston (22) est disposé dans le boîtier de mesure (21).

23. Dispositif selon la revendication 22, **caractérisé en ce que** le piston de traction (23) est muni d'un capteur de pression (25).

24. Dispositif selon la revendication 22, **caractérisé en ce que** le piston de traction (23) est raccordé à un absorbeur de pression (29) piézoélectrique.

25. Dispositif selon la revendication 22, **caractérisé en ce que** la tige de piston (22) est garnie d'une jauge extensométrique (30).
